# EUROPEAN PATENT SPECIFICATION

(11) **EP 1 564 092 B1**
(45) Date of publication and mention of the grant of the patent: **11.10.2006**
(21) Application number: 05250767.0
(22) Date of filing: 10.02.2005
(51) Int. Cl.: B60R 25/02

(54) **Anti-theft locking device for automobile steering wheels**
Diebstahlverriegelungsvorrichtung für ein Fahrzeuglenkrad
Dispositif de verrouillage antivol pour le volant d'un véhicule

(30) Priority: 12.02.2004 ES 200400331
(43) Date of publication of application: 17.08.2005
(73) Proprietor: Luma Industrias, S.A., 20120 Hernani (Guipuzcoa) (ES)
(72) Inventor: Muerza, Alfredo, c/o Luma Industrias, S.A., 20120 Hernani (Guipuzcoa) (ES)
(74) Representative: Boden, Keith McMurray

(56) References cited:
- US-A- 4 829 797
- US-A- 5 097 685

## Description

### SCOPE OF THE INVENTION

This invention relates to an anti-theft locking device for the steering wheels of automotive vehicles, of the generic type of design comprising a prehensile part in the manner of pincers with jaws which are capable of clasping the curve of the steering wheel and, preferably, one of its arms, and, to this prehensile part, there is provided another part which limits the rotation of the steering wheel in such a way that it prevents normal driving of the vehicle and which comprises a bar of sufficient length that, if the steering wheel is turned, it will strike against fixed elements of the passenger compartment of the vehicle or the body of the driver himself. In the prehensile part, there is provided means capable of imposing a jamming position for the turning prevention bar with the prehensile part attached to the steering wheel.

### PRIOR ART

There are devices known at present in this field which have an arrangement in which the turning prevention bar and the prehensile part produce the locking immobilisation, but all the force is imposed on the lock which connects the two elements in relation to the unlocking or locking of the jaws, and, in consequence, the locking device can only sustain what its locking mechanism can sustain. A typical device having the features of the preamble of claim 1 can be seen in US-A-4829797.

### EXPLANATION OF THE INVENTION AND ITS ADVANTAGES

Against this background, the present invention proposes an anti-theft locking device for the steering wheels of automotive vehicles which is of a special design consisting of a turning prevention bar which at one end incorporates, in a non-detachable manner, a bolt which is permanently connected to a support which constitutes the body in relation to which jaws of the locking device extend, which are designated as upper and lower depending on their respective operational position in relation to the steering wheel, the bolt of which is provided with a polygonal section which has a sliding adjustment in relation to a counterpart polygonal hole located in said support, and respective polygonal apertures which are provided in an upper jaw, which is secured to this support, and in a lower jaw, which is connected in a jointed manner to the upper jaw by means of said polygonal bolt, which, within the body of the support, is capable of sliding longitudinally in operation between the respective unlocked and locked positions of the lock, such that, in the unlocked position, the polygonal apertures of the jaws coincide with respective ring-shaped recesses located in this polygonal bolt, and, in the locked position, the polygonal apertures coincide with a counterpart polygonal section of the bolt, and a lock, actuated by a key, which is fitted in the body of the support and operates in conjunction with jamming means capable of blocking the axial sliding capacity of the bolt in its locked position. Preferably, this unlocked position of the locking device results from sliding movement of the bolt which is produced when, with the locking device in the locked position, the turning prevention bar is pushed as far as the support, and, consequently, this locked position of the locking device results from sliding movement of the bolt which is produced when, with the locking device in the unlocked position, the turning prevention bar is pushed in the direction of withdrawal of the support.

A particular feature of the proposed device consists of the fact that the locking of the jaws is achieved by axial sliding of the bar and complementary insertion of its polygonal areas into corresponding areas of the jaws, which allows for this to be as strong as may be desired simply by the dimensions of the bar and jaws without the locking force being exerted on the mechanism of the lock.

In this respect, its functional simplicity and effectiveness are striking. In the locked position, the general polygonal section of the polygonal bolt passes through the polygonal apertures of the upper and lower jaws. When the polygonal bolt has passed through the polygonal apertures of the lower jaw, the bolt, and therefore the anti-turning bar, cannot rotate in respect of the lower jaw, and, in consequence, cannot cause the opening of the upper jaw in relation to this lower jaw. This locked state is then jammed by turning the key to a locked position of the lock in which the key can be extracted. In order to attain the unlocked position of the locking device, it is necessary first to turn the key to the unlocked position of the lock, which releases the blocking effect on the locking device, although jamming of the locked position of the locking device is maintained. It is then possible, with the anti-turning bar, to slide the bolt as far as the unlocked position in which the ring-shaped recesses of this polygonal bolt are now crossing the polygonal apertures of the lower jaw, which allows the bolt to be rotated in respect of this and, as a result, the same can be done with the support and the upper jaw which is secured to it. In this position, it is possible both to withdraw and reposition the locking device in relation to the steering wheel.

These and other particular features of the invention are described in the detailed description which follows, making reference to the appended drawings.

### DRAWINGS AND REFERENCE NUMBERS

In order to understand better the nature of the present invention, a preferred industrial embodiment is represented in the appended drawings, which are of solely an illustrative nature and are not limitative.

Figure 1 is an exploded view in perspective of a device according to the invention.

Figure 2 is a side view, conventionally sectioned, showing the device of Figure 1 once it has been fitted and in the locked position.

Figure 3 is as Figure 2, but in the unlocked position.

Figure 4 is a transverse section through the device according to the invention, which conventionally illustrates, in the same plane, the ball (13) and one of the screws (14) for securing the upper jaw (4) to the support (3).

Figures 5 to 8 are diagrammatic representations illustrating the function of the device according to the invention.

The following reference numbers are used in these drawings:
1. Anti-turning bar
2. Polygonal bolt
3. Support
4. Upper jaw on the support (3)
5. Lower jaw on the support (3)
6. Polygonal hole in the support (3)
7. Polygonal apertures in the upper jaw (4)
8. Polygonal apertures in the lower jaw (5)
9. Ring-shaped recesses in the bolt (3)
10. Lock
11. Key
12. Ring-shaped channel for the bolt (2)
13. Ball
14. Screws for securing the upper jaw (4) to the support (3)
15. Steering wheel

### EXPLANATION OF A PREFERRED EMBODIMENT

With reference to the drawings and reference numbers referred to above, a preferred embodiment of the aim of the invention is illustrated in the appended drawings, relating to an anti-theft locking device for the steering wheels of automotive vehicles, which falls within the field of those which provide a general design comprising a prehensile part in the manner of pincers with jaws which are capable of clasping the curve of the steering wheel and, preferably, one of its arms, and, to this prehensile part, there is provided another part which limits the rotation of the steering wheel in such a way that it prevents normal driving of the vehicle and which is formed by a bar of sufficient length that, if the steering wheel is turned, it will strike against fixed elements of the passenger compartment of the vehicle or the body of the driver himself. In addition, there is means present in the prehensile part for jamming the position in which this prehensile part is capable of remaining coupled to the steering wheel, exercising its anti-theft function by making it impossible to turn the steering wheel with sufficient scope to allow the direction of the vehicle to be steered.

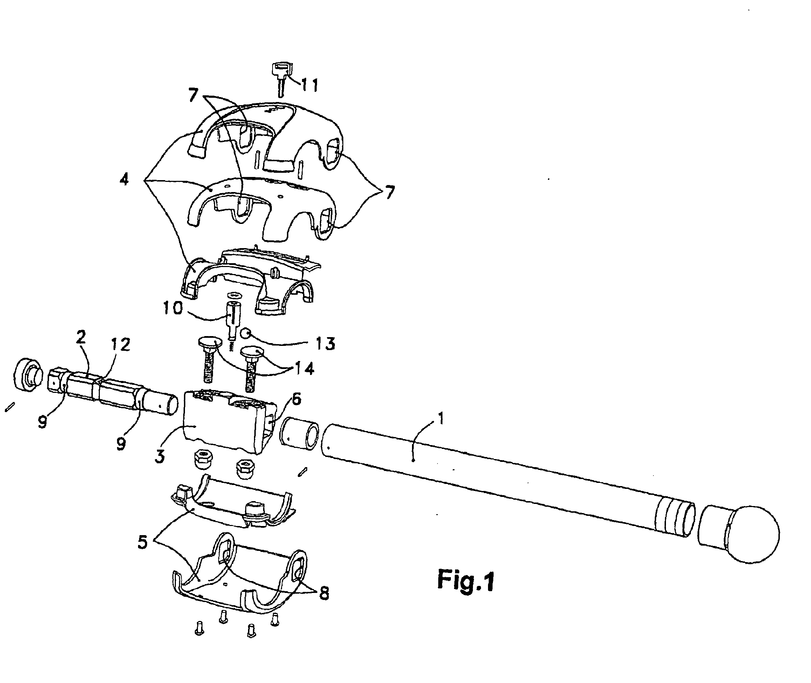

The essence of the invention can be appreciated from the embodiment represented in Figures 1 to 4, in which it can be seen that the proposed device consists of an anti-turning bar (1) which at one end incorporates, in a non-detachable manner, a bolt (2) which is permanently connected to a support (3), which constitutes the body from which a number of jaws of the locking device extend, these being designated as upper (4) and lower (5) depending on their respective operational position in relation to the steering wheel, the bolt (2) of which is provided with a polygonal section which has a sliding adjustment in relation to a counterpart polygonal hole (6) located in said support (3), and respective polygonal apertures (7, 8) which are provided in an upper jaw (4), which is secured to this support (3), and in a lower jaw (5), which is connected, in a jointed manner, to the upper jaw (4) by means of said polygonal bolt (2) which, within the body of the support (3), is capable of sliding longitudinally between the respective unlocked and locked positions, such that, in the unlocked position, the polygonal apertures (7, 8) of the jaws (4, 5) coincide with ring-shaped recesses (9) located in this polygonal bolt (2), and, in the locked position, the polygonal apertures (7, 8) coincide with a counterpart polygonal section of the bolt (2), and a lock (10), actuated by a key (11), which is fitted in the body of the support (3) and operates in conjunction with jamming means capable of blocking the axial sliding capacity of the bolt (2) in its locked position. Within the design of the polygonal shape indicated for the transverse section of the bolt (2), in the illustrated embodiment a polygonal bolt (2) has been selected which is of square section. Other options are possible, such as, for example, that in which the polygonal bolt (2) is of hexagonal section. With regard to the means for jamming the locked position of the polygonal bolt (2), according to the preferred embodiment as illustrated, this consists of the polygonal bolt (2) having a ring-shaped channel (12) in which it is possible to locate part of a ball (13), which is pushed by the lock (10) when the key (11) is turned for the lock (10) to be in the locked position. Another variant which falls within the scope of the invention is that in which the polygonal bolt (2) has a spherical indentation in which it is possible to locate part of a ball (13) which is pushed by the lock (10) when the key (11) is turned for the lock (10) to be in the locked position, this option not being represented in the drawings.

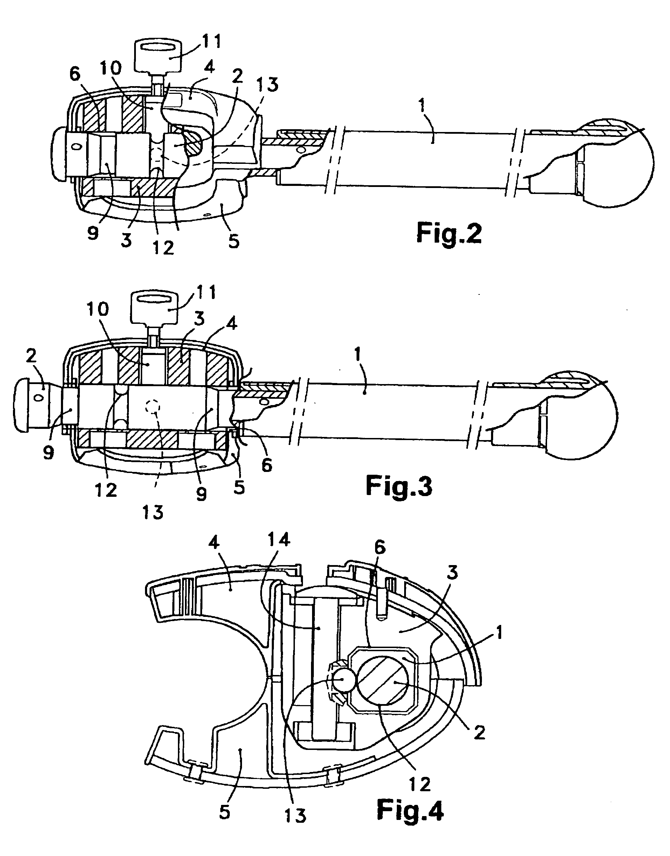

The fitting of the device is illustrated in Figures 2 to 4. Figure 2 illustrates the position corresponding to the locked position. Depending upon the position of the key (11), the locking device is simply locked without the possibility of the jaws being separated, but allowing the sliding of the polygonal bolt (2) to the unlocked position (Figure 3), or, with the key (11) turned half a turn to the locked position of the lock (10), jamming of the locked state remains established, which makes it impossible for the polygonal bolt (2) to move to the position in Figure 3, this jamming being established by the penetration of the ball (13) into the ring-shaped channel (12), as illustrated in Figure 4.

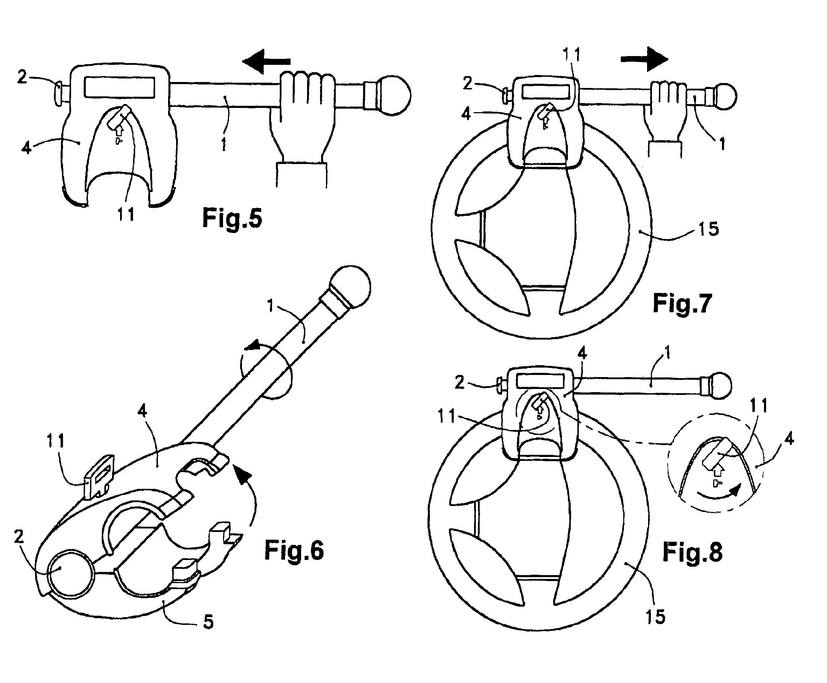

Figures 5 to 8 illustrate the operational sequence for placing the device on the steering wheel (15) of an automobile. In Figure 5, the key (11) is in the unlocked position, and the polygonal bolt (2) is brought to the unlocked position, by pushing the anti-turning bar (1) in the direction indicated by the arrow. Then, by applying a rotation on the anti-turning bar (1), it is possible (Figure 6) to open the upper jaw (4) because the ring-shaped recesses (9) of the polygonal bolt (2) have been located (Figure 3) across the polygonal apertures (8) of the lower jaw (5) and the polygonal apertures (7) of the upper jaw (4). In this situation, it is possible to apply the device to the steering wheel (15), covering part of it and one of its spokes (Figure 7), in such a way that pushing the anti-turning bar (1) in a direction contrary to the previous direction causes the polygonal bolt (2) to reposition its polygonal section across said polygonal apertures (7, 8) of the upper (4) and lower (5) jaws. Finally, it is sufficient to turn the key (11) through half a turn (as indicated by the arrow in the detailed representation in Figure 8) for the lock (10) to remain locked, pushing the ball (13) into the ring-shaped channel (12), as can be seen in Figure 4. It can be seen that, in this procedure, the unlocked position of the locking device results from the sliding of the bolt (2), which is attained when, with the locking device in the locked position, the anti-turning bar (1) is pushed towards the support (3) and, likewise, that said locked position of the locking device results from the sliding of the bolt (2) which is attained when, with the locking device in the unlocked position, the anti-turning bar (1) is pushed in the direction of withdrawal of the support (3). It is, however, evident that this is not limitative on the scope of the invention, and that this could be reversed without altering the essence of the invention.

## Claims

1. An anti-theft locking device for the steering wheels of automotive vehicles, comprising a prehensile part which is held by jaws which are capable of clasping the curve of a steering wheel and, preferably, one of its arms, and, to its prehensile part, there is provided another part which limits the turning of the steering wheel in such a way that it prevents normal driving of the vehicle and comprises a bar of sufficient length such that, if the steering wheel is turned, it will strike against fixed elements of the passenger compartment of the vehicle or the body of the driver himself, **characterised in that** it consists of an anti-turning bar (1) which at one end incorporates, in a non-detachable manner, a bolt (2) which is permanently connected to a support (3), which constitutes the body in relation to which a number of jaws of the locking device extend, the jaws being designated as upper (4) and lower (5) depending on their respective operational position in relation to the steering wheel, wherein the bolt (2) is provided with a polygonal section which is slideable in relation to a counterpart polygonal hole (6) located in said support (3), and respective polygonal apertures (7, 8) which are provided in an upper jaw (4), which is secured to the support (3), and in a lower jaw (5), which is connected in a jointed manner to the upper jaw (4) by means of said polygonal bolt (2) which, within the body of the support (3), is capable of sliding longitudinally between the respective unlocked and locked positions of the locking device, such that, in the unlocked position, the polygonal apertures (7, 8) of the jaws (4, 5) coincide with ring-shaped recesses (9) located in the polygonal bolt (2), and, in the locked position, the polygonal apertures (7, 8) coincide with a counterpart polygonal section of the polygonal bolt (2), and a lock (10), actuated by a key (11), which is fitted in the body of the support (3) and operates in conjunction with jamming means capable of blocking the longitudinal sliding capacity of the bolt (2) in its locked position.

2. An anti-theft locking device for the steering wheels of automotive vehicles according to the preceding claim, **characterised in that** said means of jamming the locked position of the bolt (2) consists of the polygonal bolt (2) having a ring-shaped channel (12) in which it is possible to locate part of a ball (13) which is pushed by the lock (10) when the key (11) is turned for the lock (10) to be in the locked position.

3. An anti-theft locking device for the steering wheels of automotive vehicles according to the preceding claim, **characterised in that** said means of jamming the locked position of the bolt (2) consists of the polygonal bolt (2) having a spherical indentation in which it is possible to locate part of a ball (13) which is pushed by the lock (10) when the key (11) is turned for the lock (10) to be in the locked position.

4. An anti-theft locking device for the steering wheels of automotive vehicles according to any of the preceding claims, **characterised in that** said polygonal bolt (2) is square in section.

5. An anti-theft locking device for the steering wheels of automotive vehicles according to any of claims 1 to 3, **characterised in that** said polygonal bolt (2) is hexagonal in section.

6. An anti-theft locking device for the steering wheels of automotive vehicles according to any of the preceding claims, **characterised in that** said unlocked position of the locking device results from sliding of the bolt (2) which is attained when, with the locking device in the locked position, the anti-theft bar (1) is pushed towards the support (3).

7. An anti-theft locking device for the steering wheels of automotive vehicles according to any of the preceding claims, **characterised in that** said locked position of the locking device results from sliding of the bolt (2) which is attained when, with the locking device in the unlocked position, the anti-turning bar (1) is pushed in the direction of withdrawal of the support (3).

## Patentansprüche

1. Verriegelungsvorrichtung zur Diebstahlsicherung für Kraftfahrzeuglenkräder, umfassend ein Greifteil, das von Backen gehalten wird, welche zur Umklammerung der Rundung eines Lenkrads und vorzugsweise eines seiner Arme fähig sind, und bei der am Greifteil ein weiteres Teil vorgesehen ist, welches eine Drehung des Lenkrads derart einschränkt, dass **dadurch** ein normaler Fahrbetrieb des Fahrzeugs verhindert wird, und eine Stange, die lang genug ist, dass sie bei Drehung des Lenkrads an ortsfesten Elementen der Insassenkabine des Fahrzeugs oder am Körper des Fahrers selbst anschlägt, **dadurch gekennzeichnet, dass** sie aus einer eine Drehung verhindernden Stange (1) besteht, die an einem Ende einen nicht-abnehmbaren Bolzen (2) aufweist, der dauerhaft mit einer Halterung (3) verbunden ist, welche den Körper bildet, von dem aus eine Anzahl von Backen der Verriegelungsvorrichtung weg verlaufen, wobei die Backen je nach ihrer jeweiligen Betriebsstellung bezüglich des Lenkrads als obere Backen (4) und untere Backen (5) bezeichnet werden, wobei der Bolzen (2) einen polygonalen Abschnitt aufweist, der bezüglich einer als Gegenstück dazu in der Halterung (3) vorgesehenen durchgehenden Öffnung (6) und entsprechenden polygonalen Öffnungen (7, 8) verschiebbar ist, die jeweils in einer an der Halterung angebrachten oberen Backe (4) und in einer mittels des polygonalen Bolzens (2) gelenkig mit der oberen Backe (4) verbundenen unteren Backe (5) vorgesehen sind, wobei der polygonale Bolzen (2) im Körper der Halterung (3) in Längsrichtung jeweils zwischen der entriegelten und der verriegelten Stellung der Verriegelungsvorrichtung verschoben werden kann, so dass in der entriegelten Stellung die polygonalen Öffnungen (7, 8) der Backen (4, 5) mit am polygonalen Bolzen (2) befindlichen ringförmigen Vertiefungen (9) zusammentreffen, und in der verriegelten Stellung die polygonalen Öffnungen (7, 8) mit einem ihr Gegenstück bildenden polygonalen Abschnitt des polygonalen Bolzens (2) zusammentreffen, und ein mit einem Schlüssel (11) betätigtes Schloss (10), welches im Körper der Halterung (3) eingebaut ist und mit einem Blockiermittel zusammenwirkt, welches zur Blockierung der Längsverschiebbarkeit des Bolzens (2) in seiner verriegelter Stellung fähig ist.

2. Verriegelungsvorrichtung zur Diebstahlsicherung für Kraftfahrzeuglenkräder nach dem voranstehenden Anspruch, **dadurch gekennzeichnet, dass** das Mittel zum Blockieren der verriegelten Stellung des Bolzens (2) aus dem polygonalen Bolzen (2) mit einem ringförmigen Kanal (12) besteht, in dem ein Teil einer Kugel (13) angeordnet werden kann, welche bei Drehung des Schlüssels (11) zur Verriegelung des Schlosses (10) von letzterem heruntergeschoben wird.

3. Verriegelungsvorrichtung zur Diebstahlsicherung für Kraftfahrzeuglenkräder nach dem voranstehenden Anspruch, **dadurch gekennzeichnet, dass** das Mittel zum Blockieren der verriegelten Stellung des Bolzens (2) aus dem polygonalen Bolzen (2) mit einer kugelförmigen Vertiefung besteht, in der ein Teil einer Kugel (13) angeordnet werden kann, welche bei Drehung des Schlüssels (11) zur Verriegelung des Schlosses (10) von letzterem heruntergeschoben wird.

4. Verriegelungsvorrichtung zur Diebstahlsicherung für Kraftfahrzeuglenkräder nach einem der voranstehenden Ansprüche, **dadurch gekennzeichnet, dass** der polygonale Bolzen (2) quadratische Querschnittsform hat.

5. Verriegelungsvorrichtung zur Diebstahlsicherung für Kraftfahrzeuglenkräder nach einem der Ansprüche 1 bis 3, **dadurch gekennzeichnet, dass** der polygonale Bolzen (2) sechseckige Querschnittsform hat.

6. Verriegelungsvorrichtung zur Diebstahlsicherung für Kraftfahrzeuglenkräder nach einem der voranstehenden Ansprüche, **dadurch gekennzeichnet, dass** sich die entriegelte Stellung der Verriegelungsvorrichtung durch ein Verschieben des Bolzens (2) ergibt, welches **dadurch** bewirkt wird, dass in der verriegelten Stellung der Verriegelungsvorrichtung die Diebstahlssicherungsstange (1) zur Halterung (3) hin gedrückt wird.

7. Verriegelungsvorrichtung zur Diebstahlsicherung für Kraftfahrzeuglenkräder nach einem der voranstehenden Ansprüche, **dadurch gekennzeichnet, dass** sich die verriegelte Stellung der Verriegelungsvorrichtung durch ein Verschieben des Bolzens (2) ergibt, welches **dadurch** bewirkt wird, dass in der entriegelten Stellung der Verriegelungsvorrichtung die eine Drehung verhindernde Stange (1) in Herausziehrichtung der Halterung (3) gedrückt wird.

## Revendications

1. Dispositif de verrouillage antivol pour les volants de direction de véhicules automobiles, comprenant une partie préhensile qui est maintenue par des mâchoires qul peuvent serrer la courbe d'un volant de direction et, de préférence, un de ses bras, et, dans sa partie préhensible, il est placé une autre partie qui limite la rotation du volant de direction de telle manière qu'elle empêche une conduite normale du véhicule et comprend une barre de longueur suffisante, de telle manière que, si le volant de direction est tourné, elle vient contre des éléments fixes du compartiment passager du véhicule ou le corps du conducteur lui-même, **caractérisé en ce qu'**il consiste en une barre anti-rotation (1) qui à une extrémité incorpore, d'une manière non détachable, un boulon (2) qui est connecté de manière permanente à un support (3), qui constitue le corps en liaison avec lequel un certain nombre de mâchoires du dispositif de verrouillage s'étendent, les mâchoires étant désignées comme des mâchoires supérieures (4) et inférieures (5) selon leur position fonctionnelle par rapport au volant de direction, dans lequel le boulon (2) est pourvu d'une section polygonale qui peut glisser en relation avec un trou polygonal correspondant (6) situé dans ledit support (3), et des ouvertures polygonales respectives (7, 8) qui sont placées dans une mâchoire supérieure (4), qui est fixée sur le support (3), et dans une mâchoire Inférieure (5), qui est connectée d'une manière jointe à la mâchoire supérieure (4) au moyen dudit boulon polygonal (2) qui, dans le corps du support (3), peut glisser longitudinalement entre les positions respectivement verrouillée et déverrouillée du dispositif de verrouillage, de telle manière que, dans la position déverrouillée, les ouvertures polygonales (7, 8) des mâchoires (4, 5) coïncident avec des évidements de forme annulaire (9) situés dans le boulon polygonal (2), et dans la position verrouillée, les ouvertures polygonales (7, 8) coïncident avec une section polygonale correspondante du boulon polygonal (2), et un verrou (10) actionné par une clé (11), qui est monté dans le corps du support (3) et fonctionne en liaison avec des moyens de coincement pouvant bloquer la capacité de glissement longitudinal du boulon (2) dans sa position verrouillée.

2. Dispositif de verrouillage antivol pour les volants de direction de véhicules automobiles selon la revendication précédente, **caractérisé en ce que** lesdits moyens de coincement de la position bloquée du boulon (2) consistent en un boulon polygonal (2) ayant un canal (12) de forme annulaire dans lequel il est possible de situer une partie d'une bille (13) qui est poussée par le verrou (10) quand la clé (11) est tournée pour mettre le verrou (10) dans la position verrouillée.

3. Dispositif de verrouillage antivol pour les volants de direction de véhicules automobiles selon la revendication précédente, **caractérisé en ce que** lesdits moyens de coincement de la position bloquée du boulon (2) consistent en le boulon polygonal (2) ayant une indentation sphérique dans laquelle il est possible de situer une partie d'une bille (13) qui est poussée par le verrou (10) quand la clé (11) est tournée pour mettre le verrou (10) dans la position verrouillée.

4. Dispositif de verrouillage antivol pour les volants de direction de véhicules automobiles selon l'une quelconque des revendications précédentes, **caractérisé en ce que** ledit boulon polygonal (2) est de section carrée.

5. Dispositif de verrouillage antivol pour les volants de direction de véhicules automobiles selon l'une quelconque des revendications 1 à 3, **caractérisé en ce que** ledit boulon polygonal (2) est de section hexagonale.

6. Dispositif de verrouillage antivol pour les volants de direction de véhicules automobiles selon l'une quelconque des revendications précédentes, **caractérisé en ce que** ladite position débloquée du dispositif de verrouillage résulte du glissement du boulon (2) qui est atteint quand, avec le dispositif de verrouillage dans la position verrouillée, la barre antivol (1) est poussée vers le support (3).

7. Dispositif de verrouillage antivol pour les volants de direction de véhicules automobiles selon l'une quelconque des revendications précédentes, **caractérisé en ce que** ladite position bloquée du dispositif de verrouillage résulte du glissement du boulon (2) qui est atteint quand, avec le dispositif de verrouillage dans la position déverrouillée, la barre antivol (1) est poussée dans la direction d'enlèvement du support (3).
